# EUROPEAN PATENT APPLICATION

(11) **EP 4 786 118 A1**
(43) Date of publication of application: **05.08.2026**
(21) Application number: 23954156.8
(22) Date of filing: 26.09.2023
(51) Int. Cl.: B25J 15/08

(54) **ELECTRIC GRIPPER**

(71) Applicant: SMC Corporation, Tokyo 104-0031 (JP)
(72) Inventor: KOBAYASHI, Shunya, Chiba 277-0871 (JP)
(74) Representative: Keil & Schaafhausen Patentanwälte PartGmbB
(86) International application number: PCT/JP2023/034896
(87) International publication number: WO 2025/069179

(57) **Abstract**

An electric gripper (10A) comprises a motor (34), a pair of moveable members (40) for gripping a workpiece, a guide rod (38) that guides the pair of moveable members, and a power transmission mechanism (42) that transmits power from the motor to the pair of moveable members so as to cause the pair of moveable members to move toward and away from one another along the guide rod. Each of the pair of moveable members is provided with a slide bearing (78) that slides with respect to the guide rod.

## Description

### TECHNICAL FIELD

The present invention relates to an electric gripper.

### BACKGROUND ART

JP 2018-176306 A discloses an electric gripper including a motor and a pair of movable members for gripping a workpiece.

### SUMMARY OF THE INVENTION

There is a long awaited need for a more satisfactory electric gripper.

The present invention has the object of meeting the aforementioned challenge.

An aspect of the present invention is characterized by an electric gripper including a motor, a pair of movable members configured to grip a workpiece, a guide rod configured to guide the pair of movable members, and a power transmission mechanism configured to transmit power of the motor to the pair of movable members to move the pair of movable members toward and away from each other along the guide rod, wherein each of the pair of movable members is provided with a slide bearing configured to slide with respect to the guide rod.

According to the present invention, a more satisfactory electric gripper can be obtained.

### BRIEF DESCRIPTION OF DRAWINGS

[FIG. 1] FIG. 1 is a perspective view of an electric gripper according to a first embodiment of the present invention;
[FIG. 2] FIG. 2 is a front view of the electric gripper of FIG. 1;
[FIG. 3] FIG. 3 is a bottom view of the electric gripper of FIG. 1;
[FIG. 4] FIG. 4 is an exploded perspective view of the electric gripper of FIG. 1;
[FIG. 5] FIG. 5 is an exploded perspective view of the electric gripper of FIG. 1;
[FIG. 6] FIG. 6 is a perspective view of a gripper main body;
[FIG. 7] FIG. 7 is an exploded perspective view with partial omission of the gripper main body;
[FIG. 8] FIG. 8 is a vertical cross-sectional view of the electric gripper of FIG. 1;
[FIG. 9] FIG. 9 is a cross-sectional view taken along line IX-IX of FIG. 8;
[FIG. 10] FIG. 10 is a cross-sectional view taken along line X-X of FIG. 8;
[FIG. 11] FIG. 11 is a cross-sectional view taken along line XI-XI of FIG. 8;
[FIG. 12] FIG. 12 is a perspective view of an electric gripper according to a second embodiment of the present invention; [FIG. 13] FIG. 13 is a front view of the electric gripper of FIG. 12;
[FIG. 14] FIG. 14 is a bottom view of the electric gripper of FIG. 12;
[FIG. 15] FIG. 15 is an exploded perspective view of the electric gripper of FIG. 12;
[FIG. 16] FIG. 16 is a perspective view of a gripper main body;
[FIG. 17] FIG. 17 is a vertical cross-sectional view of the electric gripper of FIG. 12; and
[FIG. 18] FIG. 18 is a cross-sectional view taken along line XVIII-XVIII of FIG. 17.

### DETAILED DESCRIPTION OF THE INVENTION

### (First Embodiment)

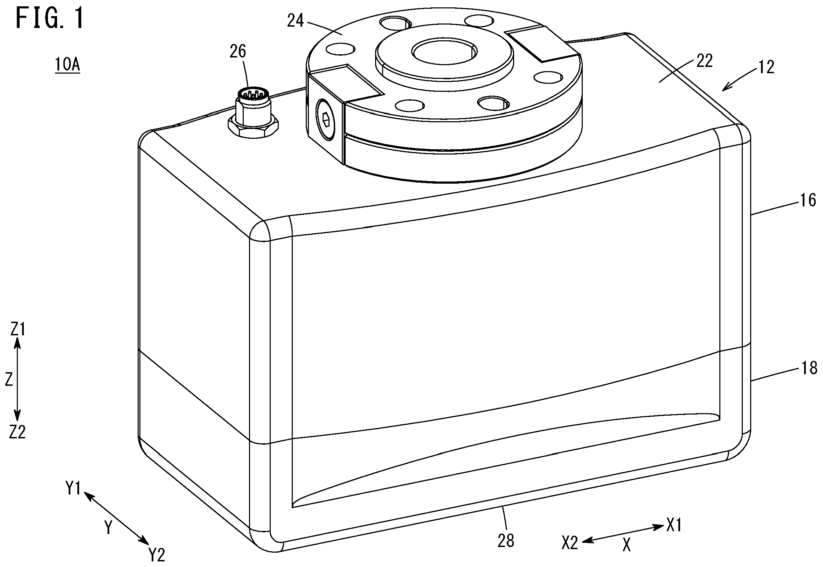

An electric gripper 10A according to a first embodiment of the present invention, will be described below with reference to the drawings. As shown in FIG. 1, the electric gripper 10A is used by being attached to, for example, a distal end portion of a robot arm (not shown). In the description of the electric gripper 10A, an X direction in FIG. 1 may be referred to as a widthwise direction, a Y direction in FIG. 1 may be referred to as a thickness direction, and a Z direction in FIG. 1 may be referred to as a height direction. The widthwise direction, the thickness direction, and the height direction are perpendicular to each other.

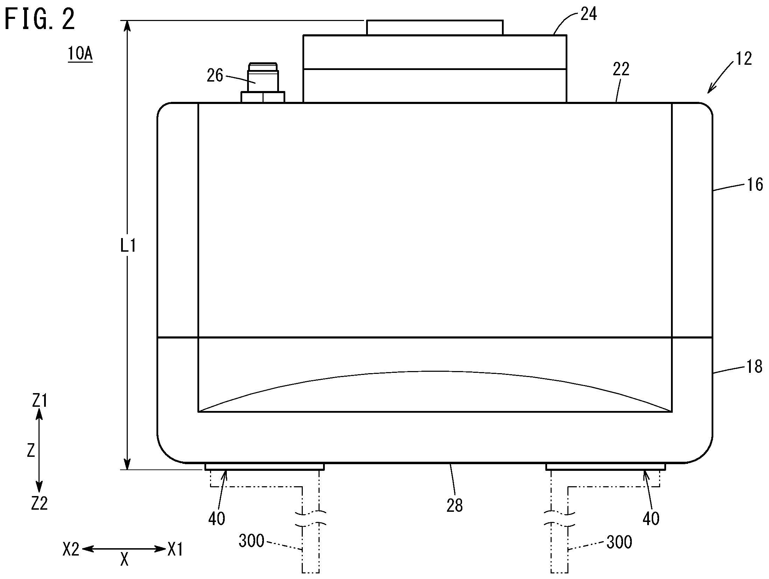

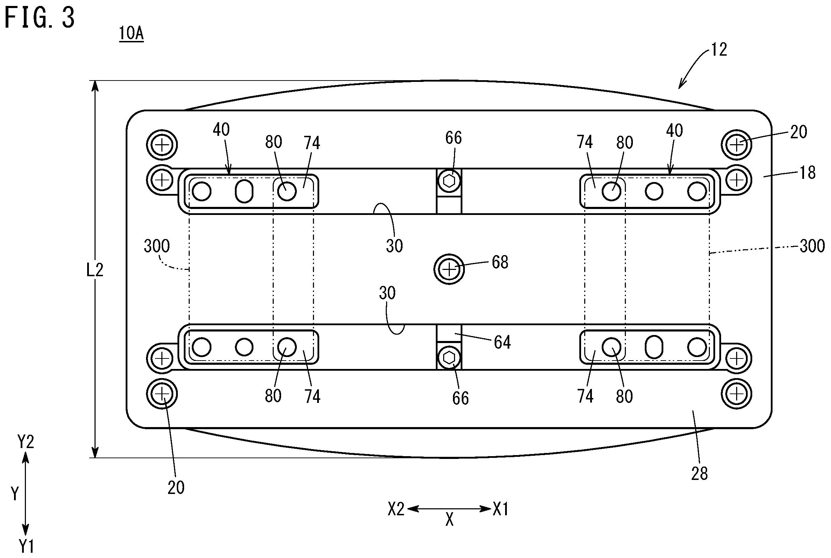

As shown in FIGS. 2 and 3, a pair of attachments 300 for gripping a workpiece are attachable to and detachable from the electric gripper 10A. The shape, size, and the like of the attachments 300 are appropriately selected depending on the material, shape, size, and the like of the workpiece. The electric gripper 10A moves the pair of attachments 300 closer to and away from each other in the X direction.

As shown in FIG. 1, the electric gripper 10A is formed in a vertically long shape. As shown in FIGS. 1 to 3, a length (maximum length) L1 of the electric gripper 10A in the height direction (Z direction) is longer than a length (maximum length) L2 of the electric gripper 10A in the thickness direction (Y direction). Therefore, the electric gripper 10A can be shortened in the thickness direction.

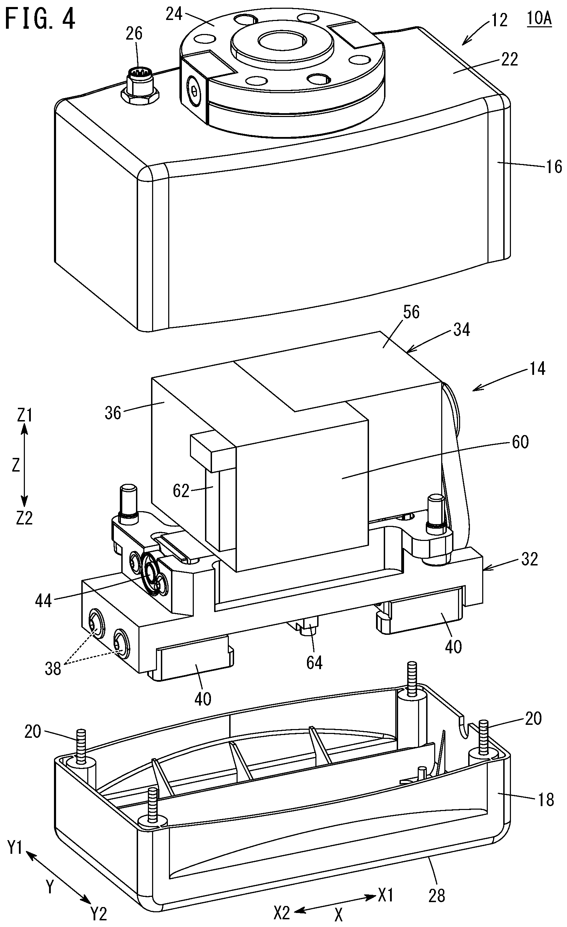

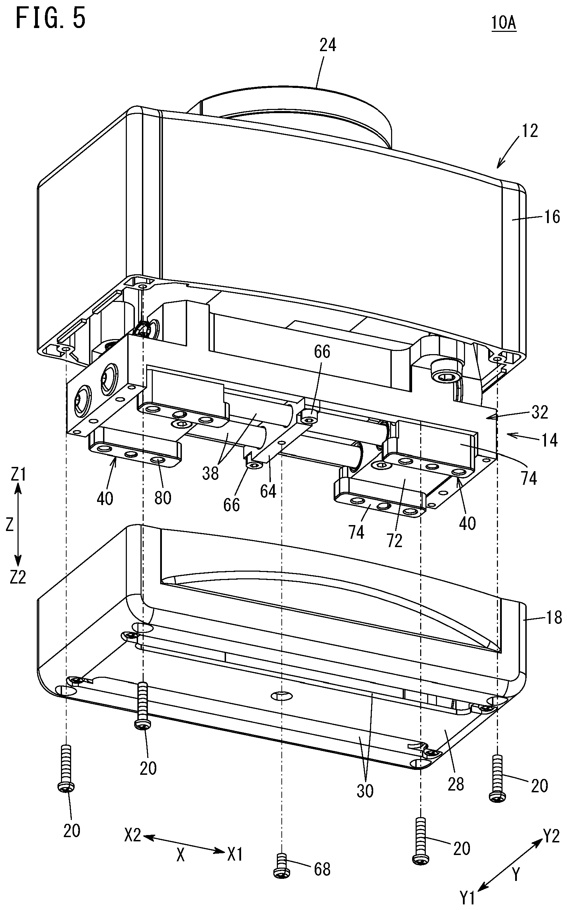

As shown in FIGS. 4 and 5, the electric gripper 10A includes a casing 12 and a gripper main body 14. The casing 12 houses the gripper main body 14. The casing 12 includes a first cover member 16 that covers the gripper main body 14 in the Z1 direction, and a second cover member 18 that covers the gripper main body 14 in the Z2 direction. The first cover member 16 and the second cover member 18 are connected by fastening members 20. As shown in FIG. 4, an adapter 24 and an external connector 26 are attached to a first wall surface 22 of the first cover member 16 facing in the Z1 direction. The adapter 24 is attachable to and detachable from the distal end portion of the robot arm. A cable (not shown) is attachable to and detachable from the external connector 26.

As shown in FIGS. 3 and 5, a pair of elongate holes 30 extending in the widthwise direction (X direction) are formed in a second wall surface 28 of the second cover member 18 facing in the Z2 direction. The pair of elongate holes 30 are arranged in parallel in the thickness direction (Y direction). A part of a pair of movable members 40 forming the gripper main body 14 is inserted into the pair of elongate holes 30. A pair of attachments 300 are attachable to and detachable from the pair of movable members 40, respectively.

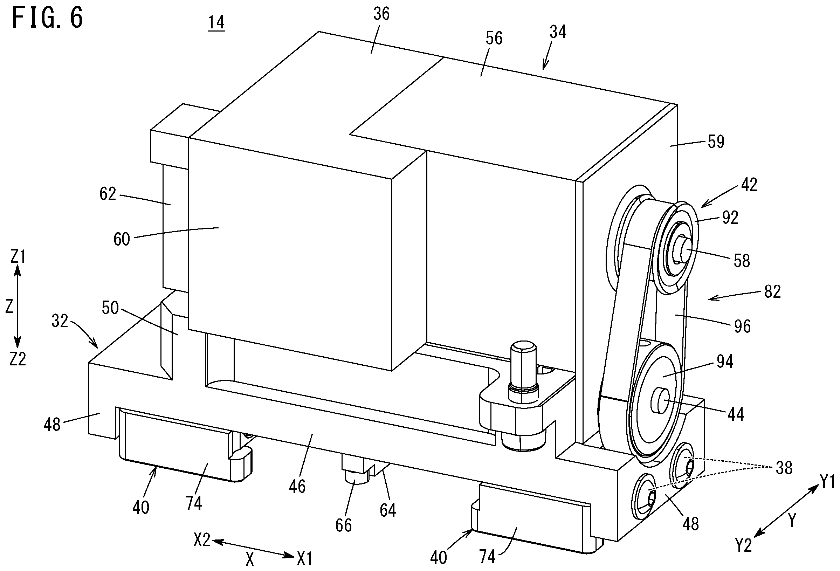

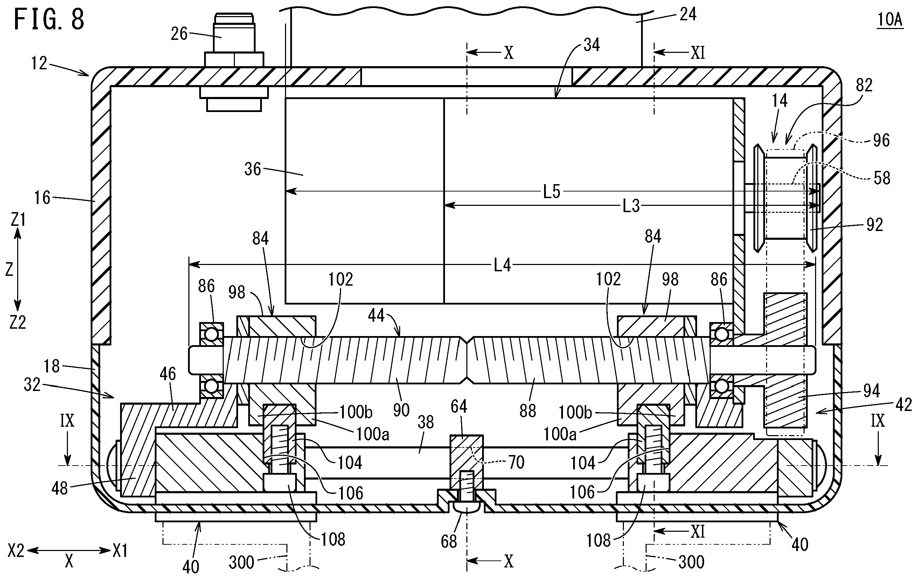

As shown in FIGS. 6 to 11, the gripper main body 14 includes a support member 32, a motor 34, a controller 36, a pair of guide rods 38, a pair of movable members 40, and a power transmission mechanism 42. The power transmission mechanism 42 has a feed screw shaft 44 for moving the pair of movable members 40 toward and away from each other. As shown in FIGS. 4 and 8, the adapter 24, the motor 34, the feed screw shaft 44, and the pair of guide rods 38 are arranged in this order in the height direction.

The support member 32 is fixed to the casing 12 by a plurality of fastening members (not shown). The support member 32 has a relatively high rigidity. The support member 32 is integrally formed or molded of, for example, a metal material or a hard resin material. The constituent material of the support member 32 is not particularly limited.

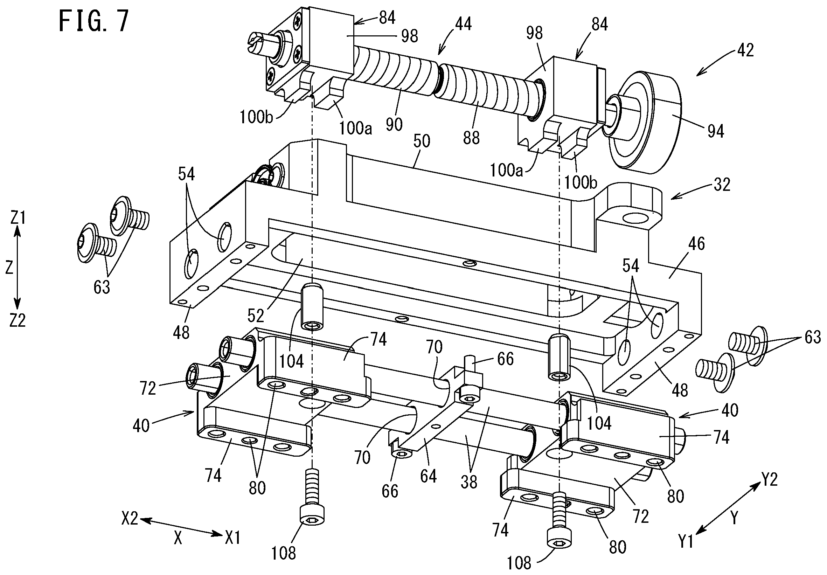

As shown in FIGS. 7 and 8, the support member 32 includes a base portion 46, a pair of first support portions 48, and a second support portion 50. The base portion 46 is a plate-shaped portion extending in the X direction. A through hole 52 is formed in the central part of the base portion 46. The pair of first support portions 48 protrude in the Z2 direction from both end portions of the base portion 46 in the X direction. The pair of first support portions 48 support the pair of guide rods 38.

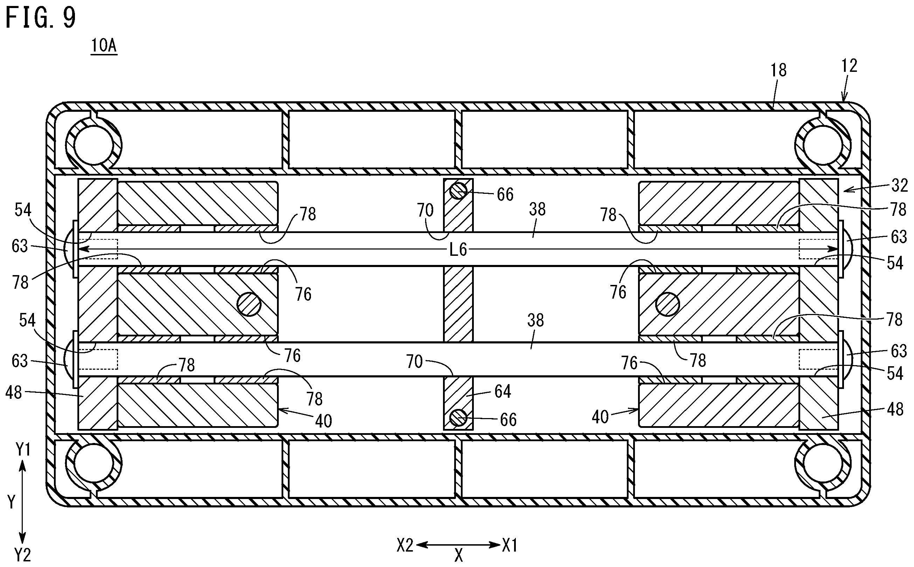

As shown in FIGS. 7 and 9, each of the first support portions 48 is formed with a pair of rod support holes 54 through which the pair of guide rods 38 are inserted. The pair of rod support holes 54 are disposed with a space therebetween in the Y direction. As shown in FIG. 7, the second support portion 50 protrudes from the base portion 46 toward the Z1 direction and extends in an annular shape. The second support portion 50 supports the power transmission mechanism 42. The internal space of the second support portion 50 communicates with the through hole 52.

As shown in FIGS. 4, 6, and 8, the motor 34 is driven by electric power supplied via the external connector 26. The motor 34 extends in the X direction. The motor 34 includes a motor main body 56 and a rotating shaft 58. The motor main body 56 is formed in a rectangular parallelepiped shape. The motor main body 56 is fixed to the support member 32 via a plate member 59. The rotating shaft 58 protrudes from the motor main body 56 in the X1 direction.

The controller 36 controls the motor 34. The controller 36 is integrally provided on a surface of the motor main body 56 facing the opposite side (X2 direction) to the rotating shaft 58. As shown in FIG. 6, the length of the controller 36 in the Y direction is longer than the length of the motor main body 56 in the Y direction. The controller 36 is formed in an L-shape when viewed in the Z direction. The controller 36 has a protruding portion 60 protruding in the Y2 direction relative to the motor main body 56.

The protruding portion 60 extends in the X1 direction. A part of the protruding portion 60 overlaps the motor main body 56 when viewed in the Y direction. In other words, the protruding portion 60 is integrally provided on a surface of the motor main body 56 facing in the Y2 direction. The protruding portion 60 may protrude in the Y1 direction relative to the motor main body 56. As shown in FIG. 4, a motor connector 62 is provided on a surface of the protruding portion 60 facing in the X2 direction. The motor connector 62 is connected to the external connector 26 via a connection cable (not shown).

As shown in FIGS. 7 and 9, the pair of guide rods 38 guide the pair of movable members 40 in the X direction. The pair of guide rods 38 are arranged in parallel in the Y direction. The guide rods 38 extend in the X direction along the rotating shaft 58 of the motor 34. The end portions of the guide rods 38 are passed through the rod support holes 54 of the support member 32. The guide rods 38 are attached to the first support portions 48 by fastening members 63.

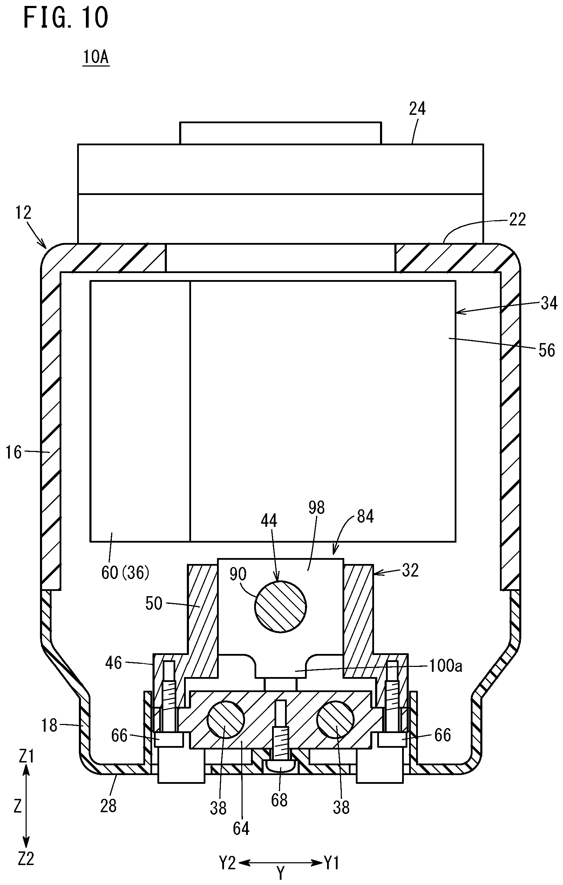

As shown in FIGS. 7, 9, and 10, intermediate portions of the guide rods 38 in the axial direction are supported by an intermediate support portion 64. The intermediate support portion 64 is fixed to the support member 32 by a plurality of fastening members 66. Further, the intermediate support portion 64 is fixed to the second cover member 18 by a fastening member 68 (see FIG. 10). The intermediate support portion 64 is formed with a pair of intermediate insertion holes 70 through which the pair of guide rods 38 are inserted.

As shown in FIGS. 7 and 9, the pair of movable members 40 are moved in the X direction by the power of the motor 34. Each of the movable members 40 includes a movable main body 72 and a pair of attachment portions 74. The movable main body 72 is formed in a plate shape. A pair of insertion holes 76 through which the pair of guide rods 38 are inserted are formed in the movable main body 72. The pair of insertion holes 76 are arranged in parallel to be spaced apart from each other in the Y direction. As shown in FIG. 9, two slide bearings 78 are disposed in each of the insertion holes 76. Each of the slide bearings 78 is formed in an annular shape and fixed to the movable main body 72. Each of the slide bearings 78 slides in the X direction with respect to the guide rod 38. Note that only the single slide bearing 78 may be disposed in each of the insertion holes 76.

As shown in FIG. 7, the pair of attachment portions 74 protrude in the Z2 direction from both end portions of the movable main body 72 in the Y direction. Each of the attachment portions 74 is formed with a plurality of mounting holes 80 for attaching the attachment 300 (see FIG. 2).

As shown in FIG. 8, the power transmission mechanism 42 transmits the power of the motor 34 to the pair of movable members 40. The power transmission mechanism 42 includes the feed screw shaft 44, an intermediate member 82, and a pair of nuts 84.

The feed screw shaft 44 extends in the X direction along the rotating shaft 58. In the axial direction of the feed screw shaft 44, a total length L3 of the motor 34 is shorter than a total length L4 of the feed screw shaft 44. One end portion (an end portion in the X1 direction) of the feed screw shaft 44 is disposed in parallel with the rotating shaft 58. The feed screw shaft 44 extends in the X2 direction beyond the end portion of the motor 34 in the X2 direction.

An end portion of the controller 36 on the side opposite to the motor 34 is located between the other end portion (an end portion in the X2 direction) of the feed screw shaft 44 and the motor 34 in the X direction. The total length L4 of the feed screw shaft 44 along the X direction is longer than a length L5 in the X direction from the end of the motor 34 in the X1 direction to the end of the controller 36 in the X2 direction. In the axial direction of the feed screw shaft 44, the total length L4 of the feed screw shaft 44 is shorter than a total length L6 of the guide rod 38 (see FIG. 9).

The feed screw shaft 44 is rotatably supported by a pair of bearings 86 fixed to the second support portion 50. Each of the bearings 86 is, for example, a rolling bearing, but may be a slide bearing. As shown in FIGS. 7 and 8, the feed screw shaft 44 includes a right screw portion 88 and a left screw portion 90. The right screw portion 88 and the left screw portion 90 are spaced apart from each other in the X direction. That is, no externally threaded portion is formed in the central part of the feed screw shaft 44 in the axial direction.

As shown in FIGS. 6 and 8, the intermediate member 82 transmits the rotational force of the motor 34 to the feed screw shaft 44. The intermediate member 82 includes a first pulley 92, a second pulley 94, and a belt 96. The first pulley 92 is an annular member fixed to the rotating shaft 58. The second pulley 94 is an annular member fixed to one end portion (an end portion in the X1 direction) of the feed screw shaft 44. The belt 96 is formed in an annular shape and is wound around the first pulley 92 and the second pulley 94. The first pulley 92 and the second pulley 94 are arranged in parallel in the Z direction. The intermediate member 82 may be configured by, for example, a plurality of gears.

As shown in FIGS. 7 and 8, the pair of nuts 84 are respectively screw-engaged with the right screw portion 88 and the left screw portion 90. Each of the nuts 84 includes a nut main body 98 and a pair of pressing portions 100a and 100b. The nut main body 98 has a quadrangular outer shape. As shown in FIG. 8, a hole 102 through which the feed screw shaft 44 is inserted is formed in the nut main body 98. The hole 102 is formed with an internal thread that is screw-engaged with the external thread of the feed screw shaft 44.

As shown in FIG. 7, the pair of pressing portions 100a and 100b are plate-shaped portions that protrude from the nut main body 98 in the Z2 direction. The pair of pressing portions 100a and 100b face each other in a state of being separated from each other in the X direction. The pressing portion 100a is located closer to the center of the feed screw shaft 44 in the axial direction than the pressing portion 100b is.

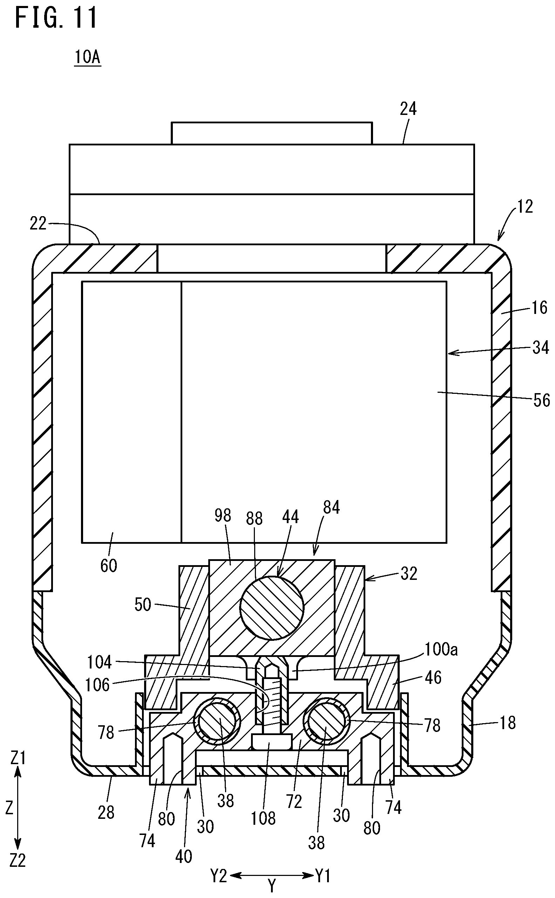

As shown in FIGS. 7, 8, and 11, a pin member 104 is disposed between the pair of pressing portions 100a and 100b. The pin member 104 engages with the pair of pressing portions 100a and 100b. As shown in FIGS. 8 and 11, the pin member 104 is inserted into a holding hole 106 formed in a surface of the movable main body 72 facing in the Z1 direction. The pin member 104 is fixed to the movable main body 72 by a fastening member 108 in a state of being inserted into the holding hole 106. The pin member 104 is located at a central part of the movable main body 72 in the Y direction.

In the electric gripper 10A, when the rotating shaft 58 of the motor 34 rotates in the first rotational direction, the rotational force of the motor 34 is transmitted to the feed screw shaft 44 via the intermediate member 82 (the first pulley 92, the belt 96, and the second pulley 94), and the feed screw shaft 44 rotates. When the feed screw shaft 44 rotates, the pair of nuts 84 move in directions to approach each other with respect to the feed screw shaft 44. Then, the pressing portions 100b of the nuts 84 presses the pin members 104, and thus the pair of movable members 40 move in directions to approach each other. Accordingly, the workpiece can be held by the attachments 300 attached to the pair of movable members 40.

On the other hand, when the rotating shaft 58 of the motor 34 rotates in a second rotational direction that is a direction opposite to the first rotational direction, the feed screw shaft 44 rotates in the opposite direction. In this case, the pair of nuts 84 move in directions to separate away from each other with respect to the feed screw shaft 44. Then, the pressing portions 100a of the nuts 84 press the pin members 104, and thus the pair of movable members 40 move in directions to separate away from each other. In accordance with such features, it is possible to separate the attachments 300 away from the workpiece.

According to the above-described embodiment, since the pair of movable members 40 slide with respect to the guide rods 38 via the slide bearings 78, the configuration can be simplified as compared with a case where the movable members are guided by a linear guide having a plurality of rolling elements (balls). In accordance with this feature, it is possible to reduce the weight of the electric gripper 10A. Therefore, a favorable electric gripper 10A can be obtained.

### (Second Embodiment)

Next, an electric gripper 10B according to a second embodiment of the present invention will be described below with reference to the drawings. In the electric gripper 10B according to the present embodiment, configurations that are the same as those of the above-described electric gripper 10A are denoted by the same reference characters, and detailed description thereof is omitted. In the present embodiment, the same configuration as that of the electric gripper 10A described above provides the same advantageous effects.

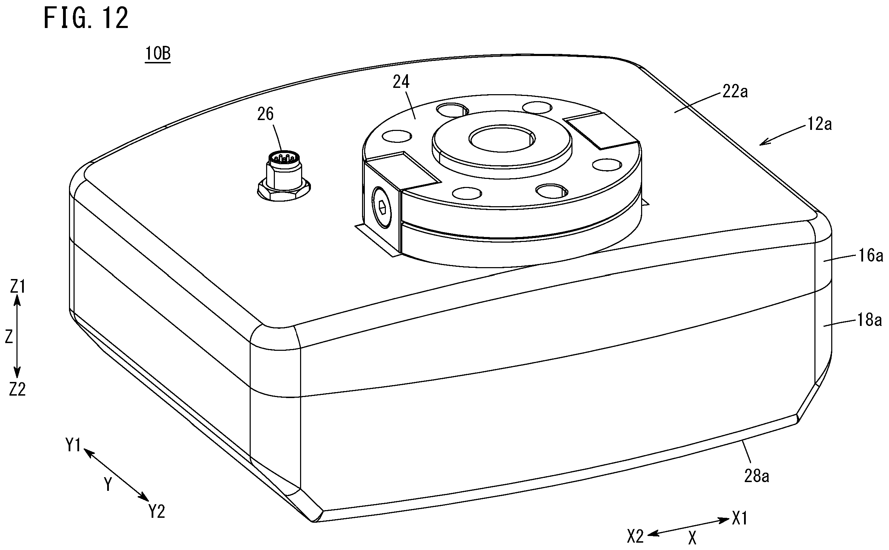

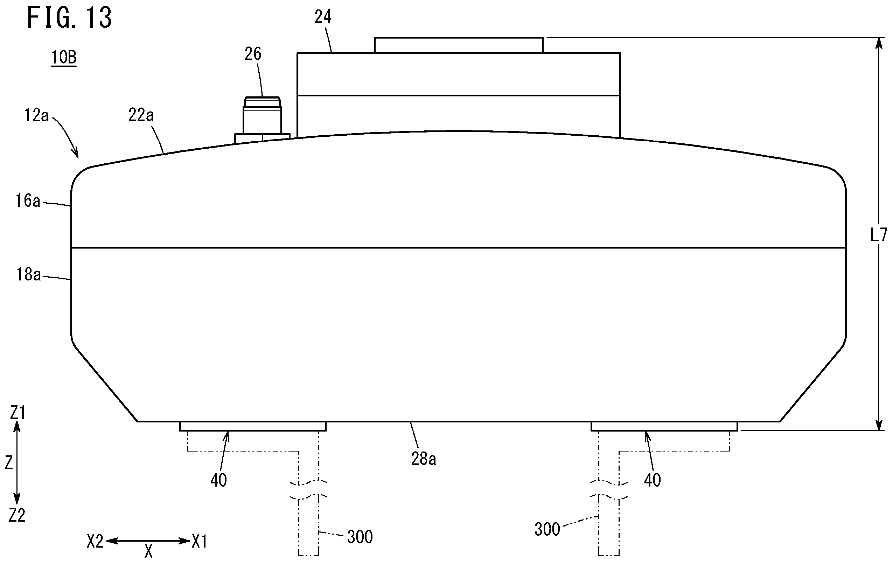

As shown in FIG. 12, the electric gripper 10B is formed in a horizontally long shape (flat shape). As shown in FIGS. 12 to 14, a length (maximum length) L7 of the electric gripper 10B in the height direction (Z direction) is shorter than a length (maximum length) L8 of the electric gripper 10B in the thickness direction (Y direction). Therefore, the electric gripper 10B can be shortened in the height direction.

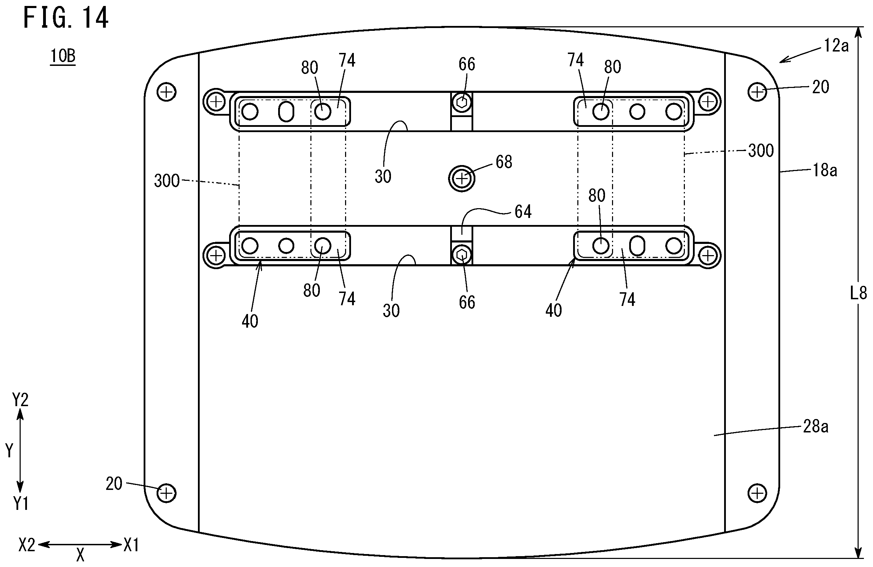

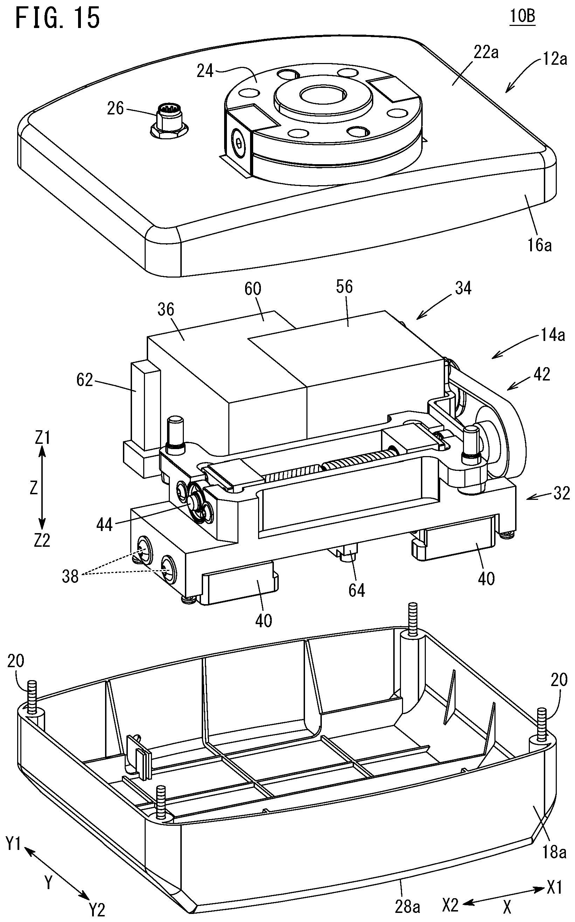

As shown in FIG. 15, the electric gripper 10B includes a casing 12a and a gripper main body 14a. The casing 12a houses the gripper main body 14a. The casing 12a includes a first cover member 16a that covers the gripper main body 14a in the Z1 direction, and a second cover member 18a that covers the gripper main body 14a in the Z2 direction. The first cover member 16a and the second cover member 18a are connected by the fastening members 20. The adapter 24 and the external connector 26 are attached to a first wall surface 22a of the first cover member 16a facing in the Z1 direction. The pair of elongate holes 30 extending in the widthwise direction (X direction) are formed in a second wall surface 28a of the second cover member 18a facing in the Z2 direction (see FIG. 14).

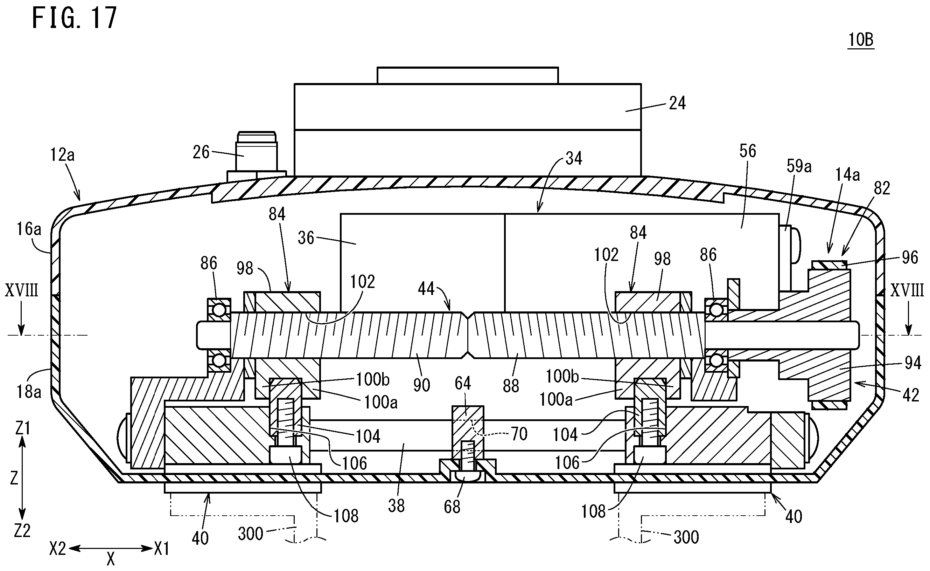

As shown in FIGS. 15 to 18, the gripper main body 14a includes the support member 32, the motor 34, the controller 36, the pair of guide rods 38, the pair of movable members 40, and the power transmission mechanism 42. As shown in FIGS. 15 and 17, the adapter 24, the feed screw shaft 44, and the pair of guide rods 38 are arranged in this order in the height direction. As shown in FIGS. 15, 16, and 18, the motor 34 and the feed screw shaft 44 are arranged in parallel along the thickness direction (Y direction).

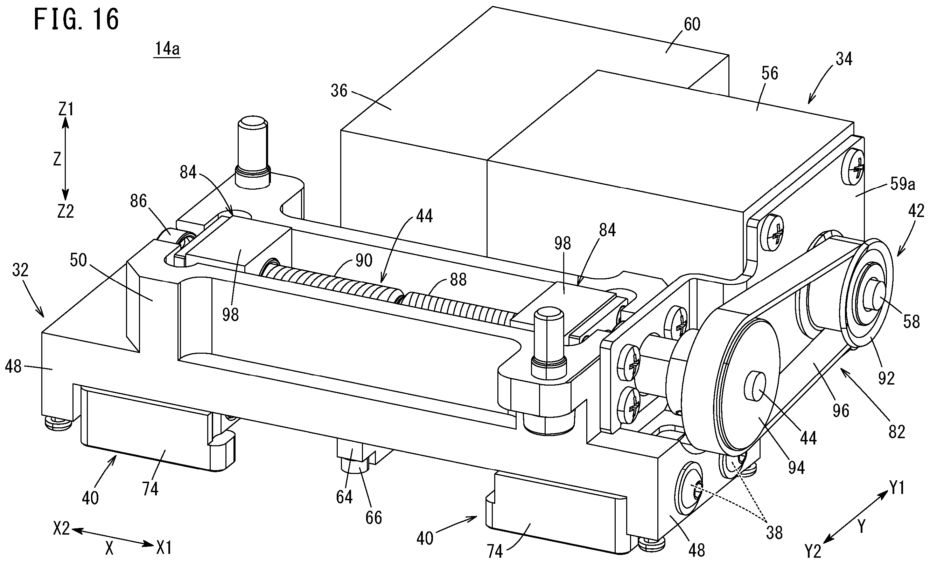

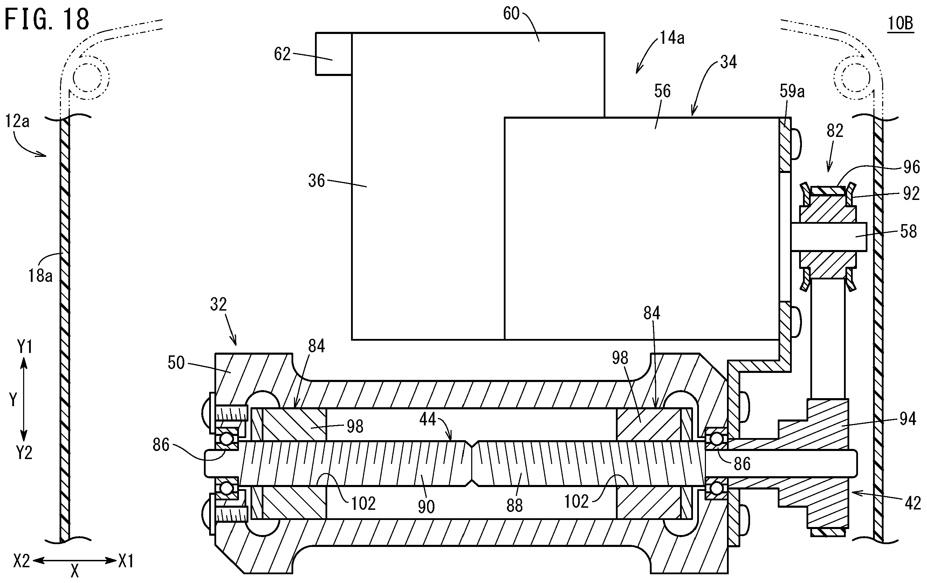

As shown in FIG. 16, the motor main body 56 is fixed to the support member 32 via a plate member 59a. The controller 36 has the protruding portion 60 that protrudes in the Y1 direction (the opposite side to the support member 32) relative to the motor main body 56. The protruding portion 60 extends in the X1 direction. A part of the protruding portion 60 overlaps the motor main body 56 when viewed in the Y direction. As shown in FIGS. 16 and 18, the rotating shaft 58 of the motor 34 is disposed in parallel with one end portion (an end portion in the X1 direction) of the feed screw shaft 44 in the Y direction.

With reference to the above disclosure, the following supplementary notes are disclosed.

### (Supplementary Note 1)

The electric gripper (10A, 10B) includes the motor (34), the pair of movable members (40) configured to grip the workpiece, the guide rod (38) configured to guide the pair of movable members, and the power transmission mechanism (42) configured to transmit power of the motor to the pair of movable members to move the pair of movable members toward and away from each other along the guide rod, wherein each of the pair of movable members is provided with the slide bearing (78) configured to slide with respect to the guide rod.

In accordance with such a configuration, since the pair of movable members slide with respect to the guide rod via the slide bearings, the configuration can be simplified as compared with a case where the movable members are guided by a linear guide having a plurality of rolling elements (balls). Accordingly, it is possible to reduce the weight of the electric gripper. Therefore, a favorable electric gripper can be obtained.

### (Supplementary Note 2)

The electric gripper according to Supplementary Note 1 may further include the support member (32) configured to support both end portions of the guide rod.

In accordance with such a configuration, the support member can suppress the deflection of the guide rod when the workpiece is gripped via the pair of movable members.

### (Supplementary Note 3)

In the electric gripper according to Supplementary Note 2, the intermediate support portion (64) configured to support the intermediate portion of the guide rod in the axial direction of the guide rod may be attached to the support member.

In accordance with such a configuration, the deflection of the guide rod can be further suppressed by the intermediate support portion.

### (Supplementary Note 4)

In the electric gripper according to any one of the Supplementary Notes 1 to 3, the guide rod may be provided in a pair, the movable members may be each formed with the pair of insertion holes (76) through which the pair of the guide rods are inserted, and the slide bearing may be disposed in each of the pair of insertion holes.

In accordance with such a configuration, the movable members can be smoothly guided along the pair of guide rods.

### (Supplementary Note 5)

In the electric gripper according to any one of the Supplementary Notes 1 to 4, the power transmission mechanism may include the feed screw shaft (44) configured to be rotated by the power of the motor and including the right screw portion (88) and the left screw portion (90), and the pair of nuts (84) configured to be screw-engaged with the right screw portion and the left screw portion, respectively, and wherein the pair of movable members may be moved by being pushed in the axial direction of the guide rod by the pair of nuts, in the state of being supported by the guide rod.

In accordance with such a configuration, the power transmission mechanism can be made to have a simple configuration. Therefore, the electric gripper can be made compact.

### (Supplementary Note 6)

In the electric gripper according to Supplementary Note 5, each of the pair of nuts may include the pair of pressing portions (100a, 100b) arranged to face each other in the state of being separated away from each other in the axial direction of the feed screw shaft, and the pin member (104) may be attached to each of the pair of movable members so as to be disposed between the pair of pressing portions.

In accordance with such a configuration, the movable member can be moved by pushing the pin member by the pressing portions of each of the nuts. In this case, the movable members can be disposed near the nuts, and the pressing force by the pressing portions can be efficiently transmitted to the movable members. Further, the electric gripper can be made compact.

### (Supplementary Note 7)

In the electric gripper according to Supplementary Note 5, the motor, the feed screw shaft, and the guide rod may be arranged in order of the motor, the feed screw shaft, and the guide rod, along the height direction perpendicular to the rotating shaft (58) of the motor.

In accordance with such a configuration, the length of the electric gripper in the thickness direction can be shortened.

### (Supplementary Note 8)

The electric gripper according to Supplementary Note 7 may further include the adapter (24) that is attachable to and detachable from the robot arm, wherein the adapter, the motor, the feed screw shaft, and the guide rod are arranged in order of the adapter, the motor, the feed screw shaft, and the guide rod, along the height direction.

In accordance with such a configuration, the length of the electric gripper in the thickness direction can be shortened.

### (Supplementary Note 9)

In the electric gripper according to Supplementary Note 7 or 8, the length (L1) of the electric gripper in the height direction may be longer than the length (L2) of the electric gripper in the thickness direction perpendicular to the height direction.

In accordance with such a configuration, the length of the electric gripper in the thickness direction can be shortened.

### (Supplementary Note 10)

In the electric gripper according to any one of Supplementary Notes 5 to 9, the feed screw shaft and the guide rod may be arranged in parallel along the height direction perpendicular to the rotating shaft of the motor, and the motor and the feed screw shaft may be arranged in parallel along the thickness direction perpendicular to the height direction.

In accordance with such a configuration, the length of the electric gripper in the height direction can be shortened.

### (Supplementary Note 11)

The electric gripper according to Supplementary Note 10 may further include the adapter that is attachable to and detachable from the robot arm, wherein the adapter, the feed screw shaft, and the guide rod may be arranged in order of the adapter, the feed screw shaft, and the guide rod, along the height direction.

In accordance with such a configuration, the length of the electric gripper in the thickness direction can be suppressed.

### (Supplementary Note 12)

In the electric gripper according to Supplementary Note 10 or 11, the length (L7) of the electric gripper in the height direction may be shorter than the length (L8) of the electric gripper in the thickness direction.

In accordance with such a configuration, the length of the electric gripper in the height direction can be shortened.

### (Supplementary Note 13)

In the electric gripper according to any one of Supplementary Notes 7 to 12, the power transmission mechanism may include the first pulley (92) provided on the rotating shaft, the second pulley (94) provided at one end portion of the feed screw shaft, and the annular belt (96) wound around the first pulley and the second pulley, and wherein the first pulley and the second pulley may be arranged in parallel with each other.

In accordance with such a configuration, the power of the motor can be efficiently transmitted to the feed screw shaft while the power transmission mechanism is downsized.

### (Supplementary Note 14)

In the electric gripper according to Supplementary Note 13, in the axial direction of the feed screw shaft, the total length (L3) of the motor may be shorter than the total length (L4) of the feed screw shaft.

In accordance with such a configuration, the length of the electric gripper in the axial direction of the feed screw shaft can be shortened.

### (Supplementary Note 15)

In the electric gripper according to Supplementary Note 14, the motor may include the motor main body (56), and the rotating shaft protruding from the motor main body, and wherein the controller (36) configured to control the motor may be integrally provided on the surface of the motor main body facing opposite to the rotating shaft.

In accordance with such a configuration, the electric gripper can be downsized as compared with a case where the motor and the controller are arranged separately.

### (Supplementary Note 16)

In the electric gripper according to Supplementary Note 15, the end portion of the controller positioned opposite to the motor may be located between the motor and the other end portion of the feed screw shaft.

In accordance with such a configuration, the length of the electric gripper in the axial direction of the feed screw shaft can be shortened.

### (Supplementary Note 17)

In the electric gripper according to Supplementary Note 16, the controller may include the protruding portion (60) configured to protrude toward one side in the thickness direction perpendicular to the height direction, relative to the motor main body.

In accordance with such a configuration, since the protruding portion of the controller protrudes in the thickness direction relative to the motor body, the length of the controller in the height direction can be suppressed.

### (Supplementary Note 18)

In the electric gripper according to Supplementary Note 17, a part of the protruding portion may overlap the motor main body when viewed in the thickness direction.

In accordance with such a configuration, the length of the controller in the height direction can be further suppressed.

### (Supplementary Note 19)

In the electric gripper according to any one of Supplementary Notes 7 to 12, in the axial direction of the feed screw shaft, the total length of the feed screw shaft may be shorter than the total length (L6) of the guide rod.

In accordance with such a configuration, the length of the electric gripper in the axial direction of the feed screw shaft can be shortened.

It should be noted that the present invention is not limited to the disclosure described above, and various configurations could be adopted therein without departing from the essence and gist of the present invention.

### [REFERENCE SIGNS LIST]

10A, 10B: electric gripper
24: adapter
32: support member
34: motor
36: controller
38: guide rod
40: movable member
42: power transmission mechanism
44: feed screw shaft
56: motor body
58: rotating shaft
60: protruding portion
64: intermediate support portion
76: insertion hole
78: slide bearing
84: nut
88: right screw portion
90: left screw portion
92: first pulley
94: second pulley
96: belt
100a, 100b: pressing portion
104: pin member

## Claims

1. An electric gripper (10A, 10B) comprising:
a motor (34);
a pair of movable members (40) configured to grip a workpiece;
a guide rod (38) configured to guide the pair of movable members; and
a power transmission mechanism (42) configured to transmit power of the motor to the pair of movable members to move the pair of movable members toward and away from each other along the guide rod,
wherein each of the pair of movable members is provided with a slide bearing (78) configured to slide with respect to the guide rod.

2. The electric gripper according to claim 1, further comprising a support member (32) configured to support both end portions of the guide rod.

3. The electric gripper according to claim 2,
wherein an intermediate support portion (64) configured to support an intermediate portion of the guide rod in an axial direction of the guide rod is attached to the support member.

4. The electric gripper according to claim 1,
wherein the guide rod is provided in a pair,
the movable members are each formed with a pair of insertion holes (76) through which a pair of the guide rods are inserted, and
the slide bearing is disposed in each of the pair of insertion holes.

5. The electric gripper according to claim 1,
wherein the power transmission mechanism includes:
a feed screw shaft (44) configured to be rotated by the power of the motor and including a right screw portion (88) and a left screw portion (90); and
a pair of nuts (84) configured to be screw-engaged with the right screw portion and the left screw portion, respectively, and
wherein the pair of movable members are moved by being pushed in an axial direction of the guide rod by the pair of nuts, in a state of being supported by the guide rod.

6. The electric gripper according to claim 5,
wherein each of the pair of nuts includes a pair of pressing portions (100a, 100b) arranged to face each other in a state of being separated away from each other in an axial direction of the feed screw shaft, and
a pin member (104) is attached to each of the pair of movable members so as to be disposed between the pair of pressing portions.

7. The electric gripper according to claim 5,
wherein the motor, the feed screw shaft, and the guide rod are arranged in order of the motor, the feed screw shaft, and the guide rod, along a height direction perpendicular to a rotating shaft (58) of the motor.

8. The electric gripper according to claim 7, further comprising an adapter (24) that is attachable to and detachable from a robot arm,
wherein the adapter, the motor, the feed screw shaft, and the guide rod are arranged in order of the adapter, the motor, the feed screw shaft, and the guide rod, along the height direction.

9. The electric gripper according to claim 7,
wherein a length (L1) of the electric gripper in the height direction is longer than a length (L2) of the electric gripper in a thickness direction perpendicular to the height direction.

10. The electric gripper according to claim 5,
wherein the feed screw shaft and the guide rod are arranged in parallel along a height direction perpendicular to a rotating shaft of the motor, and
the motor and the feed screw shaft are arranged in parallel along a thickness direction perpendicular to the height direction.

11. The electric gripper according to claim 10, further comprising an adapter that is attachable to and detachable from a robot arm,
wherein the adapter, the feed screw shaft, and the guide rod are arranged in order of the adapter, the feed screw shaft, and the guide rod, along the height direction.

12. The electric gripper according to claim 10, wherein a length (L7) of the electric gripper in the height direction is shorter than a length (L8) of the electric gripper in the thickness direction.

13. The electric gripper according to any one of claims 7 to 12, wherein the power transmission mechanism includes:
a first pulley (92) provided on the rotating shaft;
a second pulley (94) provided at one end portion of the feed screw shaft; and
an annular belt (96) wound around the first pulley and the second pulley, and
wherein the first pulley and the second pulley are arranged in parallel with each other.

14. The electric gripper according to claim 13, wherein in an axial direction of the feed screw shaft, a total length (L3) of the motor is shorter than a total length (L4) of the feed screw shaft.

15. The electric gripper according to claim 14, wherein the motor includes:
a motor main body (56); and
the rotating shaft protruding from the motor main body, and
wherein a controller (36) configured to control the motor is integrally provided on a surface of the motor main body facing opposite to the rotating shaft.

16. The electric gripper according to claim 15, wherein an end portion of the controller positioned opposite to the motor is located between the motor and another end portion of the feed screw shaft.

17. The electric gripper according to claim 16, wherein the controller includes a protruding portion (60) configured to protrude toward one side in a thickness direction perpendicular to the height direction, relative to the motor main body.

18. The electric gripper according to claim 17, wherein a part of the protruding portion overlaps the motor main body when viewed in the thickness direction.

19. The electric gripper according to any one of claims 7 to 12, wherein in an axial direction of the feed screw shaft, a total length of the feed screw shaft is shorter than a total length (L6) of the guide rod.
